# EUROPEAN PATENT APPLICATION

(11) **EP 4 733 093 A1**
(43) Date of publication of application: **29.04.2026**
(21) Application number: 25192450.2
(22) Date of filing: 29.07.2025
(51) Int. Cl.: B60D 1/62

(54) **TOWING VEHICLE WITH TOWED VEHICLE DETECTION APPARATUS, TOWED VEHICLE DETECTION APPARATUS, AND METHOD**

(30) Priority: 23.10.2024 US 202418924303
(71) Applicant: Volvo Truck Corporation, 405 08 Göteborg (SE)
(72) Inventor: LANDAU, Jared, GREENSBORO, 27407 (US); EINSTOSS, Gabriel, GREENSBORO, 27406 (US)
(74) Representative: Kransell & Wennborg KB

(57) **Abstract**

A towed vehicle detection apparatus for a towing vehicle includes a hose coupling for a hose for supplying pressurized air from the towing vehicle to brakes of the towed vehicle, a sensor configured to detect a physical position of the hose coupling relative to the towing vehicle, and a computer system configured to detect whether the towed vehicle is attached to the towing vehicle based on a signal from the sensor regarding the physical position of the hose coupling. A towing vehicle with a towed vehicle detection apparatus and a method for detecting whether a towed vehicle is attached to a towing vehicle are also provided.

## Description

### TECHNICAL FIELD

The disclosure relates generally to detecting towed vehicles. In particular aspects, the disclosure relates to towing vehicles with towed vehicle detection apparatus, towed vehicle detection apparatus, and methods for detecting whether a towed vehicle is attached to a towing vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

An illustrative towed and towing vehicle combination is a semi-trailer combination that comprises a tractor and a trailer. Other towed and towing vehicle combinations include locomotives and railroad cars. In the example of the tractor-trailer combination, the tractor comprises a powertrain, a pneumatic supply system, a braking system, and other onboard systems. Between the tractor and the trailer are provided an electrical coupling arrangement and a pneumatic coupling arrangement. It is important for an operator to know whether a trailer is attached to the tractor because the behavior of the tractor can be very different between a tractor-only configuration and a tractor-trailer configuration. It is desirable to provide a simple, reliable method and apparatus for detecting whether a trailer is attached to a tractor.

### SUMMARY

Optionally in some examples, including in at least one preferred example, a towed vehicle detection apparatus for a towing vehicle comprises a hose coupling for a hose for supplying pressurized air from the towing vehicle to brakes of the towed vehicle, a sensor configured to detect a physical position of the hose coupling relative to the towing vehicle, and a computer system configured to detect whether the towed vehicle is attached to the towing vehicle based on a signal from the sensor regarding the physical position of the hose coupling. A technical benefit may include providing a simple, reliable technique for detecting whether a towed vehicle is attached to a towing vehicle.

Optionally in some examples, including in at least one preferred example, the towed vehicle detection apparatus comprises a bracket on the towing vehicle for stowing the hose coupling, the sensor being configured to detect whether the hose coupling is stowed on the bracket. A technical benefit may include the ability to adapt existing equipment to detect whether a towed vehicle is attached to a towing vehicle.

Optionally in some examples, including in at least one preferred example, the hose coupling is a gladhand. A technical benefit may include adapting commonly used equipment to detect whether a towed vehicle is attached to a towing vehicle.

Optionally in some examples, including in at least one preferred example, the towing vehicle is a tractor and the towed vehicle is a trailer. A technical benefit may include adapting commonly used equipment on commonly used towing and towed vehicles to detect whether a towed vehicle is attached to a towing vehicle.

Optionally in some examples, including in at least one preferred example, the sensor comprises a transducer on at least one of the bracket and the hose coupling. A technical benefit may include providing a simple, reliable equipment for detecting whether a towed vehicle is attached to a towing vehicle.

Optionally in some examples, including in at least one preferred example, the bracket comprises a latch for securing the hose coupling to the bracket. A technical benefit may include providing additional security for ensuring validity of a determination that a towed vehicle is or is not attached to a towing vehicle.

Optionally in some examples, including in at least one preferred example, the sensor comprises a transducer on at least one of the bracket, the latch, and the hose coupling. A technical benefit may include providing a simple, reliable equipment for detecting whether a towed vehicle is attached to a towing vehicle.

Optionally in some examples, including in at least one preferred example, the towed vehicle detection apparatus further comprises a second towed vehicle detection apparatus for the towing vehicle, including at least one of a towed vehicle proximity sensor, a fifth wheel or kingpin connection switch, a power management system, a current load sensor, a mass or weight estimating system, a communications management system, and a pneumatic line testing system. A technical benefit may include providing additional assurance that detection of or failure to detect a towed vehicle is accurate.

Optionally in some examples, including in at least one preferred example, a vehicle with a towed vehicle detection apparatus comprises a towing vehicle adapted to tow a towed vehicle, a hose coupling for a hose for supplying pressurized air from the towing vehicle to brakes of the towed vehicle, a sensor configured to detect a physical position of the hose coupling relative to the towing vehicle, and a computer system configured to detect whether the towed vehicle is attached to the towing vehicle based on a signal from the sensor regarding the physical position of the hose coupling. A technical benefit may include providing a simple, reliable technique for detecting whether a towed vehicle is attached to a towing vehicle.

Optionally in some examples, including in at least one preferred example, the vehicle comprises a bracket on the towing vehicle for stowing the hose coupling, and the sensor being configured to detect whether the hose coupling is stowed on the bracket.. A technical benefit may include the ability to adapt existing equipment to detect whether a towed vehicle is attached to a towing vehicle.

Optionally in some examples, including in at least one preferred example, in the vehicle, the hose coupling is a gladhand. A technical benefit may include adapting commonly used equipment to detect whether a towed vehicle is attached to a towing vehicle.

Optionally in some examples, including in at least one preferred example, in the vehicle, the towing vehicle is a tractor and the towed vehicle is a trailer. A technical benefit may include adapting commonly used equipment on commonly used towing and towed vehicles to detect whether a towed vehicle is attached to a towing vehicle.

Optionally in some examples, including in at least one preferred example, in the vehicle, the sensor comprises a transducer on at least one of the bracket and the hose coupling. A technical benefit may include providing a simple, reliable equipment for detecting whether a towed vehicle is attached to a towing vehicle.

Optionally in some examples, including in at least one preferred example, in the vehicle, the bracket comprises a latch for securing the hose coupling to the bracket. A technical benefit may include providing additional security for ensuring validity of a determination that a towed vehicle is or is not attached to a towing vehicle.

Optionally in some examples, including in at least one preferred example, in the vehicle, the sensor comprises a transducer on at least one of the bracket, the latch, and the hose coupling. A technical benefit may include providing a simple, reliable equipment for detecting whether a towed vehicle is attached to a towing vehicle.

Optionally in some examples, including in at least one preferred example, the vehicle further comprises a second towed vehicle detection apparatus for the towing vehicle, including at least one of a second towed vehicle detection apparatus for the towing vehicle, including at least one of a towed vehicle proximity sensor, a fifth wheel or kingpin connection switch, a power management system, a current load sensor, a mass or weight estimating system, a communications management system, and a pneumatic line testing system. A technical benefit may include providing additional assurance that detection of or failure to detect a towed vehicle is accurate.

Optionally in some examples, including in at least one preferred example, a method for detecting whether a towed vehicle is attached to a towing vehicle, the towing vehicle comprising a hose coupling for a hose for supplying pressurized air from the towing vehicle to brakes of the towed vehicle, the method comprising sensing a physical position of the hose coupling relative to the towing vehicle, and providing an indication whether the towed vehicle is attached to the towing vehicle based on the physical position of the hose coupling relative to the towing vehicle. A technical benefit may include providing a simple, reliable technique for detecting whether a towed vehicle is attached to a towing vehicle.

Optionally in some examples, including in at least one preferred example, sensing the physical position of the hose coupling relative to the towing vehicle comprises sensing whether the hose coupling is stowed in a bracket on the towing vehicle for stowing the hose coupling. A technical benefit may include the ability to adapt existing equipment to detect whether a towed vehicle is attached to a towing vehicle.

Optionally in some examples, including in at least one preferred example, the bracket comprises a latch for securing the hose coupling to the bracket, and sensing the physical position of the hose coupling relative to the towing vehicle comprises sensing whether the hose coupling is latched in the bracket. A technical benefit may include providing additional security for ensuring validity of a determination that a towed vehicle is or is not attached to a towing vehicle.

Optionally in some examples, including in at least one preferred example, the method further comprises detecting whether the towed vehicle is attached to the towing vehicle via a second towed vehicle detection method, the second towed vehicle detection method including at least one of detecting whether the towed vehicle is attached to the towing vehicle using one or more of a towed vehicle proximity sensor, a fifth wheel or kingpin connection switch, a power management system, a current load sensor, a mass or weight estimating system, a communications management system, and a pneumatic line testing system. A technical benefit may include providing additional assurance that detection of or failure to detect a towed vehicle is accurate.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1A** is an exemplary towing vehicle with a towed vehicle detection apparatus with a towed vehicle being towed according to an example.
**FIG. 1B** is an exemplary towing vehicle with a towed vehicle detection apparatus with a towed vehicle not being towed according to an example.
**FIG. 2** is an exemplary towed vehicle detection apparatus according to an example.
**FIG. 3** is an exemplary towed vehicle detection apparatus with additional towed vehicle detection equipment according to an example.
**FIG. 4** is a flow chart of an exemplary method for detecting whether a towed vehicle is attached to a towing vehicle according to an example.
**FIG. 5** is a schematic diagram of an exemplary computer system for implementing examples disclosed herein, according to an example.

### DETAILED DESCRIPTION

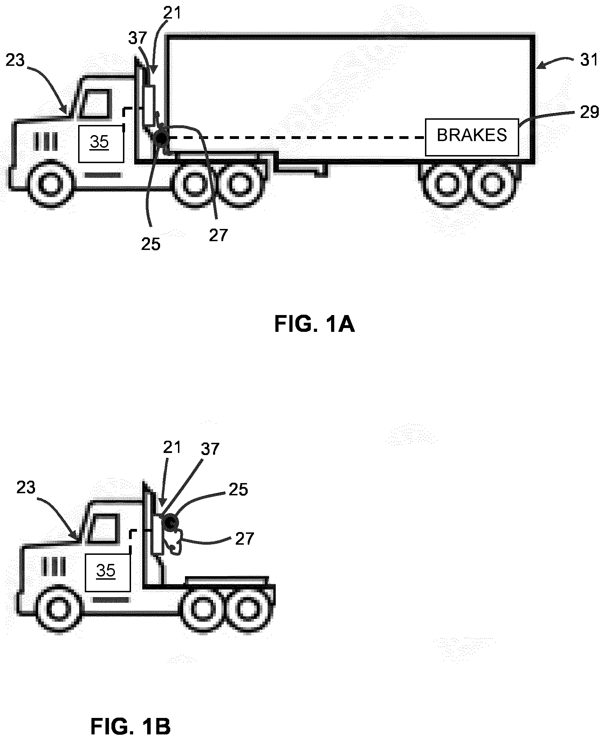

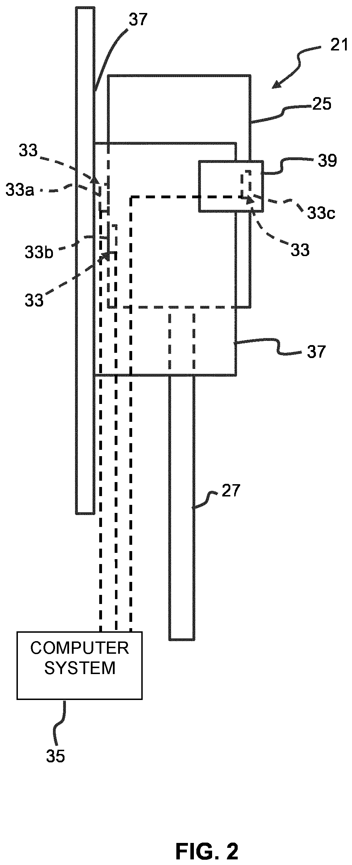

FIGS. 1A and 1B show a towed vehicle detection apparatus 21 for a towing vehicle 23 according to an aspect of the invention. The towed vehicle detection apparatus 21 comprises a hose coupling 25 for a hose 27 for supplying pressurized air from the towing vehicle 23 to brakes 29 of the towed vehicle 31. The towed vehicle detection apparatus 21 further comprises a sensor 33 (shown in phantom in FIG. 2) configured to detect a physical position of the hose coupling 25 relative to the towing vehicle 23. A computer system 1000 is configured to detect whether the towed vehicle 31 is attached to the towing vehicle 23 as in FIG. 1A based on a signal from the sensor 33 regarding the physical position of the hose coupling 25.

The towed vehicle detection apparatus 21 may comprise a bracket 37 of any suitable type on the towing vehicle 23 for stowing the hose coupling 25. The sensor 33 can be configured to detect whether the hose coupling 25 is stowed on the bracket 37 as in FIG. 1B and thereby indicate the physical position of the hose coupling as stowed on the bracket, providing an indication that no towed vehicle 31 is attached to the towing vehicle 23, or that the hose coupling is not stowed on the bracket as in FIG. 1A providing an indication that a towed vehicle is attached to the towing vehicle.

The hose coupling 25 can be a coupling of the type commonly referred to as a "gladhand", although the hose coupling may be any type of coupling suitable for use in connection with a hose for supplying pressurized air to a towed vehicle. The present invention is believed to be of particular interest where the towing vehicle 23 is a tractor and the towed vehicle 31 is a trailer, however, the invention has applications in other circumstances, such as in connections between locomotives and air brakes on railroad cars.

As seen in FIG. 2, the sensor 33 may comprise a transducer 33a (shown in phantom) and/or 33b (shown in phantom) on at least one of, or both of, the bracket 37 and the hose coupling 25. The bracket 37 may moreover comprise a latch 39 of any suitable type for securing the hose coupling 25 to the bracket. The sensor 33 may comprise a transducer 33a, 33c (shown in phantom), and/or 33b on at least one of the bracket 37, the latch 39, and the hose coupling 25, respectively.

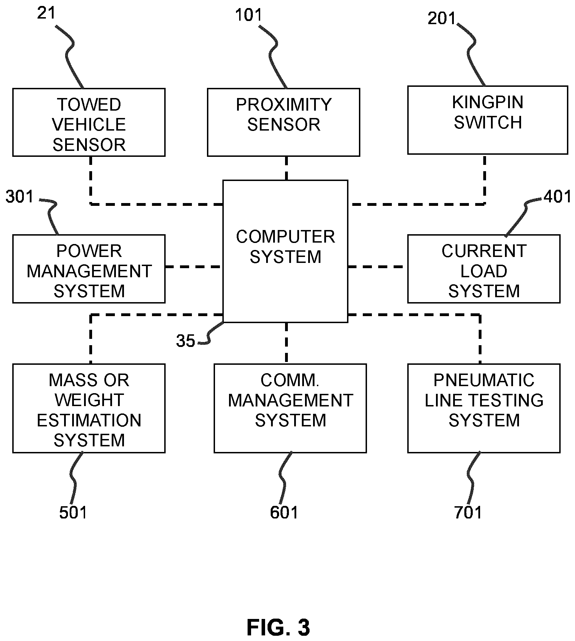

The towed vehicle detection apparatus 21 can be the only towed vehicle detection equipment, or may be provided in addition to one or more additional towed vehicle detection apparatus for the towing vehicle. As seen in FIG. 3, additional towed vehicle detection apparatus may include at least one of:
a towed vehicle proximity sensor 101 of the type that includes a device that can direct an electromagnetic or sonic wave toward where a towed vehicle would be attached to the towing vehicle and a device that can detect a reflection of the wave off of the trailer, if present, and send a signal to the computer system 1000 to indicate the presence or absence of a towed vehicle 31;
a fifth wheel or kingpin connection switch 201 that closes in the presence of a trailer kingpin within a tractor's fifth wheel coupling so that a signal can be transmitted to the computer system 1000 to indicate the presence of a towed vehicle 31;
a power management system 301 that detects power drawn from the towing vehicle's power source and generates a signal that is transmitted to the computer system 1000 and indicates when power is above a level that would be expected with no towed vehicle 31 attached;
a current load system 401 including a current load sensor configured to generate a signal corresponding to the level of current required by the towing vehicle 23 and to compare that level against a predetermined level and to generate and transmit a signal to the computer system 1000 when the current level differs from the predetermined level, indicating the presence of additional electrical systems of a towed vehicle 31;
a mass or weight estimation system 501 that estimates the mass or weight of a vehicle for stability control and other purposes and wherein mass or weights above a predetermined level may indicate the presence of a towed vehicle;
a communications management system 601 for transmitting and receiving signals between the towing vehicle 23 and any attached towed vehicle 31; and/or
a pneumatic line testing system 701 that determines the presence or absence of a towed vehicle by testing the pressure in a pneumatic line 27 that connects the towing vehicle 23 to a towed vehicle 31, if any.

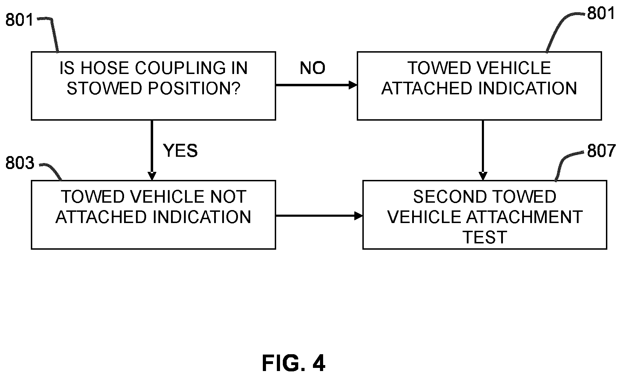

FIG. 4 is a block diagram illustrating a method for detecting whether a towed vehicle 31 is attached to a towing vehicle 23, the towing vehicle comprising a hose coupling 25 for a hose 27 for supplying pressurized air from the towing vehicle to brakes 29 of the towed vehicle. According to the method, a physical position of the hose coupling 25 relative to the towing vehicle 23 is sensed, such as by sensing, in step 801 whether the hose coupling is stowed in the bracket 37 on the towing vehicle for stowing the hose coupling, and/or sensing whether the hose coupling is latched by a latch 39 in the bracket via one or more transducers 33a, 33b, and 33c on the hose coupling, the bracket, or the latch, respectively.

**If** it is sensed that the hose coupling 25 is in a stowed position, an indication is provided at step 803 that the towed vehicle is not attached to the towing vehicle. If it is sensed that the hose coupling 25 is not in a stowed position, an indication is provided at step 805 that the hose coupling is not stowed which may mean that a towed vehicle 31 is (or may be) attached to the towing vehicle 23. To further determine whether a towed vehicle 31 is attached to the towing vehicle 23, an optional second towed vehicle detection method at step 807 can be performed including detecting whether the towed vehicle is attached to the towing vehicle using one or more of a towed vehicle proximity sensor 101, a fifth wheel or kingpin connection switch 201, a power management system 301, a current load sensor 401, a mass or weight estimating system 501, a communications management system 601, and a pneumatic line testing system 701.

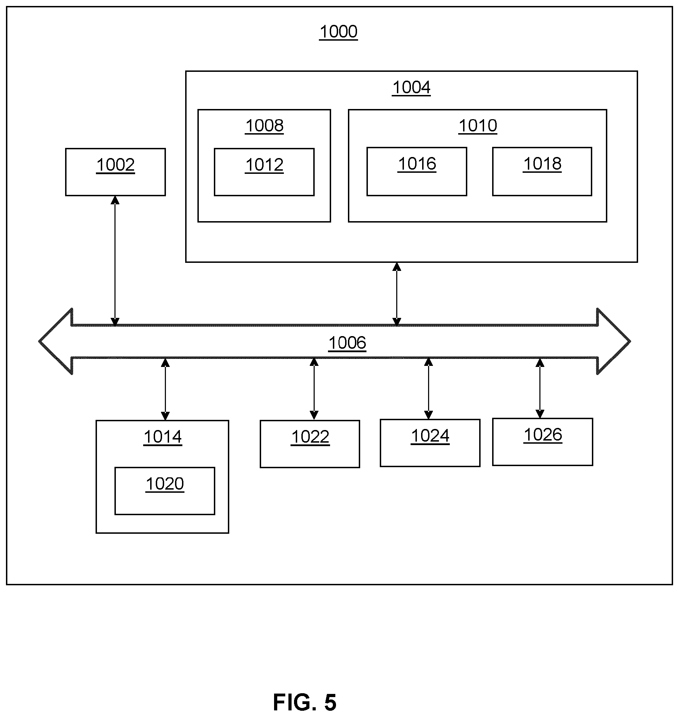

FIG. 5 is a schematic diagram of a computer system 1000 for implementing examples disclosed herein. The computer system 1000 is adapted to execute instructions from a computer-readable medium to perform these and/or any of the functions or processing described herein. The computer system 1000 may be connected (e.g., networked) to other machines in a LAN, an intranet, an extranet, or the Internet. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, computer system, control unit, electronic control unit (ECU), processor device, processing circuitry, etc., includes reference to one or more such devices to individually or jointly execute a set (or multiple sets) of instructions to perform any one or more of the methodologies discussed herein. For example, the computer system may include a single control unit or a plurality of control units connected or otherwise communicatively coupled to each other, such that any performed function may be distributed between the control units as desired. Further, such devices may communicate with each other or other devices by various system architectures, such as directly or via a Computer system Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or signal processing or for executing computer code stored in memory 1004. The processing circuitry 1002 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory computer system), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a computer system or computer system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A towed vehicle detection apparatus for a towing vehicle, comprising a hose coupling for a hose for supplying pressurized air from the towing vehicle to brakes of the towed vehicle, a sensor configured to detect a physical position of the hose coupling relative to the towing vehicle, and a computer system configured to detect whether the towed vehicle is attached to the towing vehicle based on a signal from the sensor regarding the physical position of the hose coupling.

Example 2: The towed vehicle detection apparatus as set forth in example 1, comprising a bracket on the towing vehicle for stowing the hose coupling, the sensor being configured to detect whether the hose coupling is stowed on the bracket.

Example 3: The towed vehicle detection apparatus as set forth in example 1, wherein the hose coupling is a gladhand.

Example 4: The towed vehicle detection apparatus as set forth in example 1, wherein the towing vehicle is a tractor and the towed vehicle is a trailer.

Example 5: The towed vehicle detection apparatus as set forth in example 1, wherein the sensor comprises a transducer on at least one of the bracket and the hose coupling.

Example 6: The towed vehicle detection apparatus as set forth in example 1, wherein the bracket comprises a latch for securing the hose coupling to the bracket.

Example 7: The towed vehicle detection apparatus as set forth in example 6, wherein the sensor comprises a transducer on at least one of the bracket, the latch, and the hose coupling.

Example 8: The towed vehicle detection apparatus as set forth in example 1, further comprising a second towed vehicle detection apparatus for the towing vehicle, including at least one of a towed vehicle proximity sensor, a fifth wheel or kingpin connection switch, a power management system, a current load sensor, a mass or weight estimating system, a communications management system, and a pneumatic line testing system.

Example 9: A vehicle with a towed vehicle detection apparatus comprises a towing vehicle adapted to tow a towed vehicle, a hose coupling for a hose for supplying pressurized air from the towing vehicle to brakes of the towed vehicle, a sensor configured to detect a physical position of the hose coupling relative to the towing vehicle, and a computer system configured to detect whether the towed vehicle is attached to the towing vehicle based on a signal from the sensor regarding the physical position of the hose coupling.

Example 10: The vehicle as set forth in example 9, comprising a bracket on the towing vehicle for stowing the hose coupling, and the sensor being configured to detect whether the hose coupling is stowed on the bracket..

Example 11: The vehicle as set forth in example 9, wherein the hose coupling is a gladhand.

Example 12: The vehicle as set forth in example 9, wherein the towing vehicle is a tractor and the towed vehicle is a trailer.

Example 13: The vehicle as set forth in example 9, wherein the sensor comprises a transducer on at least one of the bracket and the hose coupling.

Example 14: The vehicle as set forth in example 9, wherein the bracket comprises a latch for securing the hose coupling to the bracket.

Example 15: The vehicle as set forth in example 14, wherein the sensor comprises a transducer on at least one of the bracket, the latch, and the hose coupling.

Example 16: The vehicle as set forth in example 9, further comprising a second towed vehicle detection apparatus for the towing vehicle, including at least one of a towed vehicle proximity sensor, a fifth wheel or kingpin connection switch, a power management system, a current load sensor, a mass or weight estimating system, a communications management system, and a pneumatic line testing system.

Example 17: A method for detecting whether a towed vehicle is attached to a towing vehicle, the towing vehicle comprising a hose coupling for a hose for supplying pressurized air from the towing vehicle to brakes of the towed vehicle. The method comprises sensing a physical position of the hose coupling relative to the towing vehicle, and providing an indication whether the towed vehicle is attached to the towing vehicle based on the physical position of the hose coupling relative to the towing vehicle.

Example 18: The method as set forth in example 17, wherein sensing the physical position of the hose coupling relative to the towing vehicle comprises sensing whether the hose coupling is stowed in a bracket on the towing vehicle for stowing the hose coupling.

Example 19: The method as set forth in example 18, wherein the bracket comprises a latch for securing the hose coupling to the bracket, and sensing the physical position of the hose coupling relative to the towing vehicle comprises sensing whether the hose coupling is latched in the bracket.

Example 20: The method as set forth in example 17, further comprising detecting whether the towed vehicle is attached to the towing vehicle via a second towed vehicle detection method, the second towed vehicle detection method including detecting whether the towed vehicle is attached to the towing vehicle using one or more of a towed vehicle proximity sensor, a fifth wheel or kingpin connection switch, a power management system, a current load sensor, a mass or weight estimating system, a communications management system, and a pneumatic line testing system.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A towed vehicle detection apparatus for a towing vehicle, comprising:
a hose coupling for a hose for supplying pressurized air from the towing vehicle to brakes of the towed vehicle;
a sensor configured to detect a physical position of the hose coupling relative to the towing vehicle; and
a computer system configured to detect whether the towed vehicle is attached to the towing vehicle based on a signal from the sensor regarding the physical position of the hose coupling.

2. The towed vehicle detection apparatus as set forth in claim 1, comprising a bracket on the towing vehicle for stowing the hose coupling, the sensor being configured to detect whether the hose coupling is stowed on the bracket.

3. The towed vehicle detection apparatus as set forth in claim 1, wherein the hose coupling is a gladhand.

4. The towed vehicle detection apparatus as set forth in claim 1, wherein the towing vehicle is a tractor and the towed vehicle is a trailer.

5. The towed vehicle detection apparatus as set forth in claim 1, wherein the sensor comprises a transducer on at least one of the bracket and the hose coupling.

6. The towed vehicle detection apparatus as set forth in claim 1, wherein the bracket comprises a latch for securing the hose coupling to the bracket.

7. The towed vehicle detection apparatus as set forth in claim 6, wherein the sensor comprises a transducer on at least one of the bracket, the latch, and the hose coupling.

8. The towed vehicle detection apparatus as set forth in claim 1, further comprising a second towed vehicle detection apparatus for the towing vehicle, including at least one of
a towed vehicle proximity sensor,
a fifth wheel or kingpin connection switch,
a power management system,
a current load sensor,
a mass or weight estimating system,
a communications management system, and
a pneumatic line testing system.

9. A vehicle with a towed vehicle detection apparatus, comprising:
a towing vehicle adapted to tow a towed vehicle;
a hose coupling for a hose for supplying pressurized air from the towing vehicle to brakes of the towed vehicle;
a sensor configured to detect a physical position of the hose coupling relative to the towing vehicle; and
a computer system configured to detect whether the towed vehicle is attached to the towing vehicle based on a signal from the sensor regarding the physical position of the hose coupling.

10. The vehicle as set forth in claim 9, comprising a bracket on the towing vehicle for stowing the hose coupling, and the sensor being configured to detect whether the hose coupling is stowed on the bracket.

11. The vehicle as set forth in claim 9, wherein the hose coupling is a gladhand.

12. The vehicle as set forth in claim 9, wherein the towing vehicle is a tractor and the towed vehicle is a trailer.

13. The vehicle as set forth in claim 9, wherein the sensor comprises a transducer on at least one of the bracket and the hose coupling.

14. The vehicle as set forth in claim 9, wherein the bracket comprises a latch for securing the hose coupling to the bracket.

15. The vehicle as set forth in claim 9, further comprising a second towed vehicle detection apparatus for the towing vehicle, including at least one of
a towed vehicle proximity sensor,
a fifth wheel or kingpin connection switch,
a power management system,
a current load sensor,
a mass or weight estimating system,
a communications management system, and
a pneumatic line testing system.
